# FASCICULE DE BREVET EUROPEEN

(11) **EP 1 504 509 B1**
(45) Date de publication et mention de la délivrance du brevet: **29.11.2017**
(21) Numéro de dépôt: 03752669.6
(22) Date de dépôt: 05.05.2003
(51) Int. Cl.: H02B 13/065

(54) **INSTALLATION ÉLECTRIQUE A ISOLATION GAZEUSE POURVUE D'UN DISPOSITIF POUR DISSIPER L ÉNERGIE PRODUITE PAR UN ARC ÉLECTRIQUE**
GASISOLIERTE SCHALTANLAGE MIT EINER VORRICHTUNG ZUR ABSORBIERUNG VON LICHTBOGENENERGIE
GAS-INSULATED ELECTRICAL INSTALLATION PROVIDED WITH A DEVICE FOR DISSIPATING ENERGY PRODUCED BY AN ELECTRIC ARC

(30) Priorité: 15.05.2002 FR 0205942
(43) Date de publication de la demande: 09.02.2005
(73) Titulaire: Schneider Electric Industries SAS, 92500 Rueil-Malmaison (FR)
(72) Inventeur: CHEVALLIER, Patrick, F-38500 Voiron (FR); FAYE, Jean-Claude, F-38170 Seyssinet (FR); GENTILS, François, F-38100 Grenoble (FR); GIRAUD, Stéphane, F-38160 Saint Marcellin (FR); SERVE, Dominique, F-38330 Saint Ismier (FR)
(74) Mandataire: Tripodi, Paul
(86) Numéro de dépôt international: PCT/FR2003/001383
(87) Numéro de publication internationale: WO 2003/098760

(56) Documents cités:
- DE-A- 2 817 418
- DE-A- 19 520 698
- DE-A- 19 646 547
- DE-C- 530 905

## Description

### DOMAINE TECHNIQUE DE L'INVENTION

L'invention est relative à une installation électrique comportant une enveloppe dans laquelle sont disposés des conducteurs et, le cas échéant, des appareillages électriques tels que des appareillages de coupure, de mesure, de commutation ou de transformation électrique. Plus particulièrement, mais de manière non exclusive, l'invention a trait à une installation électrique haute tension à isolation gazeuse. Dans l'ensemble du texte, les termes "haute tension" seront pris dans leur sens le plus large, comme incluant également ce qui est connu dans certains pays comme le domaine de la "moyenne tension".

### ETAT DE LA TECHNIQUE ANTERIEURE

Les installations électriques à haute tension sont sujettes à des dysfonctionnements pouvant se traduire par un court-circuit donnant naissance à un arc électrique de très grande énergie. Lorsque l'installation électrique comporte une enveloppe, on parle d'arc interne pour désigner cet arc non contrôlé. L'arc interne se traduit par des écoulements de gaz chauds, parfois inflammables ou enflammés, à haute pression, précédés ou accompagnés d'ondes de pressions. Il convient donc de prévoir des mesures pour éviter d'une part que l'arc électrique ne provoque l'explosion de l'enveloppe et la destruction de l'installation et de son environnement, et d'autre part un échappement trop violent de gaz chauds ou enflammés en dehors de l'enveloppe. Ces protections pour le matériel et les personnes sont très délicates à réaliser et très onéreuses, car les énergies en jeu sont considérables.

Dans le document DE3424363, il a été proposé de prévoir une circulation des gaz chauds générés par l'arc interne au travers d'un filtre destiné à refroidir les gaz émis par l'arc interne. La première fonction du filtre est de refroidir les gaz s'échappant de la cellule. Le filtre est donc rempli d'un matériau ayant une importante surface d'échange et une capacité calorifique élevée. Parmi les matériaux envisagés, sont cités des tôles métalliques ondulées de faible épaisseur, des graviers ou des minéraux concassés. Ces matériaux ont l'inconvénient d'être denses, d'où une masse de filtre importante. Le filtre est confiné dans une enveloppe résistant à la pression, et pourvue d'un orifice d'entrée et d'un orifice de sortie. Une telle disposition a l'inconvénient de ne pas permettre l'absorption adéquate de l'onde de choc. Le filtre risque d'être détruit et de ne plus remplir sa fonction lors du passage des gaz. Par ailleurs, l'onde de choc est faiblement atténuée et présente en elle-même un danger direct pour l'environnement.

Pour traiter ce problème spécifique d'onde de choc, il a été proposé dans le document DE19520698 de faire circuler les gaz s'échappant d'une cellule électrique à haute tension par un clapet d'échappement, dans un conduit coudé jusqu'à un filtre de refroidissement. Le coude assure une réflexion de l'onde de choc, sensée défocaliser l'onde, ce qui permet de réduire la quantité de matériau dans le filtre. Cette disposition pose un problème d'encombrement certain. De plus, la paroi du conduit coudé assurant la réflexion de l'onde de choc doit être d'une rigidité suffisante pour ne pas être détruite par l'onde de choc, d'où un prix de revient élevé. Les réflexions d'onde dans le conduit coudé sont d'ailleurs difficiles à maîtriser et leur effet sur l'écoulement peut être contre-productif.

On sait par ailleurs, comme en témoigne dans un autre contexte le document DE 530 905, qu'il peut être intéressant de propager un nuage de poussière minéral lors d'une explosion, pour éviter la propagation des flammes. Il a été en effet proposé dans ce document d'envelopper une machine électrique fonctionnant en milieu explosif, par exemple dans une mine, dans une enveloppe remplie de poussière. En cas d'explosion de la machine, la poussière est disséminée sous forme de nuage et permet d'éviter la propagation d'étincelles. Toutefois, une telle disposition se heurte à la difficulté technique de préserver une poussière sous forme non agglomérée pendant une longue période. Par ailleurs, elle ne permet pas de casser l'onde de choc de l'explosion.

### EXPOSE DE L'INVENTION

L'invention vise donc remédier aux inconvénients de l'état de la technique, de manière à proposer une installation électrique protégée contre les effets de l'arc interne par un dispositif peu onéreux, peu encombrant, relativement léger et de très grande efficacité, tant pour absorber l'onde de choc émise par l'arc interne que pour éviter la propagation de gaz chauds, voire enflammés ou les phénomènes de post-combustion ou d'auto-inflammation de gaz à distance de l'installation.

A cet effet, l'invention a pour objet une installation électrique selon la revendication 1.

La présence de fines particules non combustibles en suspension dans le gaz modifie à la fois la stoechiométrie du mélange, sa capacité calorifique et sa cinétique. Globalement, elle empêche l'auto-inflammation du gaz en aval de la couche.

Préférentiellement, le matériau solide granulaire est non aggloméré, pour permettre un mouvement entre grains. De plus, il est avantageux que le matériau solide granulaire soit friable. Lorsque la couche est atteinte par l'onde de choc accompagnant l'arc interne, les grains s'entrechoquent et s'effritent. Ces mouvements et transformations mécaniques absorbent l'énergie de l'onde de choc. Naturellement, l'effritement produit des poussières qui contribuent à la formation du nuage. La friabilité du matériau peut être mesurée par un essai de type micro-Deval modifié. L'essai micro-Deval est destiné classiquement à déterminer la résistance à l'usure qui caractérise l'aptitude d'une roche sous forme de granulats à supporter l'action du trafic routier, et en particulier l'usure résultant du frottement des particules entre elles à sec. Pour l'essai modifié, on prépare un échantillon de M=500 grammes de matériau préalablement lavé et séché, et constitué de grains de diamètre compris entre 10 et 14 mm. On introduit l'échantillon, ainsi que 2 kg de billes en acier inoxydable de 10 mm de diamètre, dans un cylindre en acier inoxydable, chemisé intérieurement de caoutchouc et fermé par un couvercle étanche. On fait effectuer au cylindre fermé 3000 tours autour de son axe placé horizontalement en 30 minutes, puis on tamise le matériau à l'aide d'un tamis de contrôle de 1.6mm. On pèse enfin la masse M₁ du refus. On obtient alors le paramètre MD caractéristique de la friabilité, par l'expression : MD = 100 (M-M₁) / M, qui détermine le pourcentage de fine formée par attrition. Avec cet indicateur, on considère qu'un matériau sera suffisamment friable, si le facteur MD est supérieur à 10. A titre indicatif, les résultats obtenus par l'essai pour différents matériaux testés sont rapportés dans le tableau ci-dessous :

| matériau | MD |
|---|---|
| Basalte | 2 |
| Pouzzolane | 16-17 |
| Siporex® | 17 |
| Ponces | 40-42 |

Les matériaux poreux offrent l'avantage d'une très faible masse volumique apparente combinée à une forte capacité calorifique. Par ailleurs, ces matériaux ont en surface une rugosité importante, qui favorise la dissipation d'énergie par frottement lorsque les grains sont agités au passage de l'onde de choc. De préférence, on choisira des matériaux qui allient porosité et friabilité. Parmi les matériaux donnant des résultats intéressants, on notera : la pierre ponce, la pouzzolane et le Siporex®.

Préférentiellement, la couche de matériau granulaire contient, de manière disséminée dans le matériau solide granulaire, de la poussière solide incombustible pour former ledit nuage. Cette disposition permet d'éviter le risque d'agglomération des poussières qui pourrait avoir lieu après quelques années, par exemple en présence d'humidité ou de vibrations. Une telle agglomération serait en effet très néfaste : le nuage de poussières ne pourrait plus se former et la poussière agglomérée pourrait même constituer un bouchon entravant la progression des gaz en provoquant l'explosion de l'installation. Naturellement, la présence de poussière disséminée dans le matériau n'est pas incompatible avec le choix d'un matériau friable, bien au contraire.

Selon un mode de réalisation, le chemin d'évacuation des gaz est fermé par un moyen d'obturation s'ouvrant automatiquement lorsqu'il est soumis à une différence de pression dépassant un seuil prédéterminé. L'enceinte de confinement est alors une enceinte étanche. Le gaz peut être un gaz à rigidité diélectrique plus élevée que l'air, par exemple de l'hexafluorure de soufre.

Avantageusement, la couche est disposée en aval du moyen d'obturation. Le chemin d'évacuation des gaz s'élargit des moyens d'obturation à la couche, formant un volume d'expansion des gaz. Le chemin d'évacuation des gaz présente, au niveau du moyen d'obturation, une section d'ouverture, la couche présentant une surface extérieure libre située en regard du moyen d'obturation ayant une aire supérieure à trois fois l'aire la section d'ouverture. Dans les conditions géométriques ainsi définies, le gaz jaillit au niveau des moyens d'obturation sous forme de dard. L'efficacité de la couche de matériau permet de disposer celle-ci dans le dard. On réduit ainsi fortement la zone d'expansion des gaz située entre les moyens d'obturation et la couche de matériau granulaire, ce qui permet de diminuer la surface des parois délimitant le chemin d'évacuation des gaz, d'où une moindre sollicitation de ces parois par l'onde de pression arrivant jusqu'à la couche, et une limitation des déformations de l'installation.

Selon un mode de réalisation, la surface extérieure libre est située, par rapport à la section d'ouverture, à une distance inférieure à six fois un diamètre caractéristique d'ouverture, défini comme le diamètre du plus grand cercle inscrit dans ladite section d'ouverture.

Cette disposition permet, en cas d'arc interne générant une onde de pression ou de choc, une déformation importante du matériau dans la zone directement en regard de l'orifice qui absorbe l'énergie de l'onde de choc et évite sa propagation au-delà de la couche de matériau granulaire. L'utilisation d'un matériau granulaire de forte rugosité et/ou friable permet de rapprocher considérablement la couche de matériau de l'orifice de communication, ce qui contribue à réduire la pression dans le volume resté libre entre l'orifice de communication et la surface de la couche de matériau.

Selon un mode de réalisation l'unité fonctionnelle est une unité à haute tension, au sens large incluant notamment la moyenne tension. Toutefois, l'application à des installation basse tension n'est pas exclue.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
- la figure 1 représente une vue schématique en coupe d'une installation électrique selon l'invention;
- la figure 2 représente une vue schématique en coupe de l'installation de la figure 1, suite à un défaut électrique interne.
- la figure 3 représente une vue schématique en coupe d'un deuxième mode de réalisation de l'invention.

### DESCRIPTION DETAILLEE D'UN MODE DE REALISATION

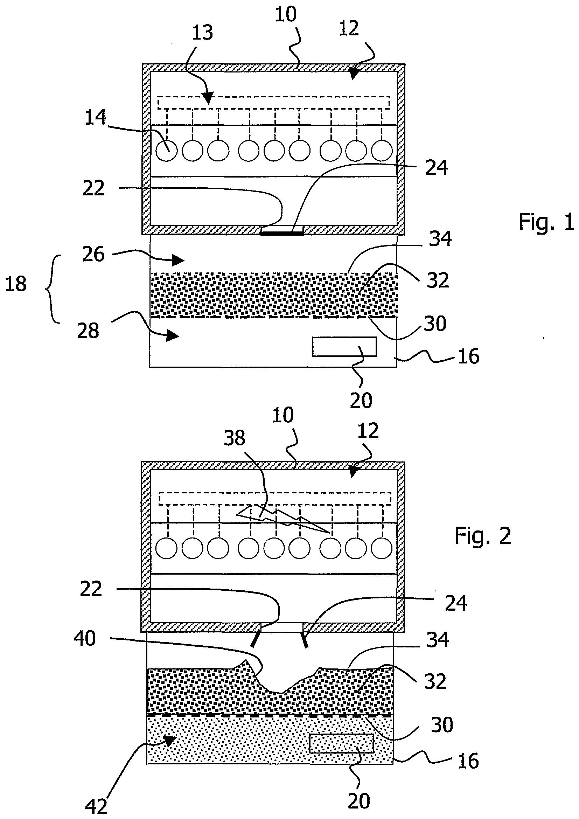

En référence à la figure 1, une installation électrique haute tension comporte une enveloppe étanche 10 formant une enceinte de confinement 12 contenant un gaz a rigidité diélectrique élevée, par exemple de l'hexafluorure de soufre, et renfermant une unité fonctionnelle à haute tension 13, représentée de manière schématique en pointillés sur la figure 1, comportant des conducteurs électriques sous haute tension, reliés le cas échéant à des appareillages électriques, tels que par exemple des disjoncteurs, sectionneurs, sectionneurs de terre, rupteurs, interrupteurs, ou bien encore des transformateurs de distribution ou des auxiliaires de mesure et connectés à l'extérieur par l'intermédiaire de traversées 14. Cette enveloppe étanche 10 est disposée sur un piétement 16 dont les parois forment avec une paroi inférieure de l'enveloppe une enceinte de refroidissement 18 pourvue en partie basse d'une ouverture d'échappement 20. La paroi inférieure de l'enceinte de confinement 12 est pourvue d'un orifice d'échappement 22 faisant communiquer l'enceinte de confinement avec l'enceinte de refroidissement. En temps normal, cet orifice 22 est fermé par une membrane 24.

L'enceinte est partagée en un volume supérieur 26 et un volume inférieur 28 par une grille horizontale rigide 30. La grille rigide 30 supporte une couche de matériau solide granulaire 32. Naturellement, la grille 30 est calibrée de manière à ne pas laisser passer les grains du matériau solide 32 qu'elle supporte. La surface supérieure 34 de la couche de matériau granulaire, plus ou moins plane, est libre ou maintenue par un filet déformable. Un volume d'expansion non rempli subsiste entre la paroi inférieure de l'enceinte de confinement 10 et la surface libre supérieure 34 du matériau.

Le matériau solide granulaire 32 est de préférence un minéral poreux de faible masse volumique apparente, à porosité ouverte ou fermée, par exemple de la pierre ponce ou de la pouzzolane. On obtient ainsi pour une masse relativement faible un volume de matériau important. On préfère également des matériaux comportant en quantité importante des poussières minérales qui, on le verra, jouent un rôle dans l'étouffement des flammes et le refroidissement des gaz.

On peut également utiliser des matériaux granulaires non poreux, tels que des sables fins de fonderie déposés sur une feuille de papier, qui forment un nuage lors du passage du flux gazeux. La masse nécessaire est alors plus importante.

En cas d'incident majeur dans l'enceinte, générant un arc électrique interne 38, la membrane 24 se rompt, comme représenté sur la figure 2, laissant passer par l'orifice d'échappement un jet de gaz chauds et de particules solides incandescentes, accompagné d'une onde de pression. En pratique, le jet est généralement supersonique et l'onde est une onde de choc. Le jet creuse dans le matériau granulaire un cratère 40. Les particules incandescentes accompagnant l'explosion sont arrêtées dans les premiers millimètres de la couche de matériau qui joue à leur égard un rôle de filtre. Les gaz sous pression traversent le matériau granulaire et se refroidissent par échange thermique au contact des grains, avant de ressortir par la grille 30 dans le volume inférieur 28, accompagnés d'un nuage de poussière 42. Ce nuage de particules solides 42 qui accompagne les gaz au-delà de la couche de matériau, contribue au refroidissement des gaz. Ce nuage apparaît d'autant plus utile que, contrairement à l'état de la technique, les gaz sortant de l'appareil n'ont pas été totalement consumés, de sorte qu'un amorçage peut provoquer une réaction en chaîne avec l'air ambiant conduisant à une postcombustion. La présence des particules solides en suspension dans le gaz modifie à la fois la stoechiométrie du mélange, sa capacité calorifique et sa cinétique, contribuant globalement à inhiber la ré-inflammation.

Empiriquement, on a constaté qu'il est possible de placer la couche de matériau granulaire à faible distance de l'orifice. Il semble que la déformation du filtre lors de l'explosion contribue très fortement à l'amortissement de l'onde de choc et minimise la montée en pression dans l'enceinte de refroidissement.

Sans vouloir présenter ici une théorie complète des phénomènes en présence, notons que l'orifice joue le rôle d'une tuyère de sorte que, en l'absence de la couche de matériau granulaire, le jet prendrait une forme de pointe focale conique, dite également dard, dont la base est constituée par le périmètre de l'orifice, et dont le sommet se situerait approximativement à une distance égale à 6 fois le diamètre de la base. Mais, du fait de la grande proximité de la couche de matériau granulaire, le jet rencontre la surface libre du matériau granulaire avant son point de focalisation en y creusant un cratère. Les grains constituant le matériau se repositionnent, provoquant des frottements accompagnés d'un effritement sensible et d'une formation de poussière. A cet égard, la rugosité des grains constituant le matériau est avantageuse puisqu'elle favorise la dissipation d'énergie par frottement et érosion. L'énergie du jet et de l'onde de choc est transférée aux grains, contribuant à les déplacer et à les concasser. Globalement, la couche de matériau joue un rôle d'absorption de l'énergie incidente de l'onde et évite la propagation de l'onde de choc à travers la couche de matériau. Du fait de la rugosité apparente élevée de l'interface constituée par la surface supérieure de la couche de matériau, la réflexion de l'onde à la surface libre de la couche de matériau est également très atténuée de sorte que l'augmentation de pression dans le volume libre au-dessus de la surface libre de la couche de matériau est également limitée.

On peut éventuellement prévoir une grille ou un filet déformable pour recouvrir la surface supérieure de la couche de matériau granulaire, afin de maintenir en place le matériau. Toutefois, ce filet ou cette grille ne doit pas entraver la déformation importante 40 de la couche de matériau par l'onde de choc.

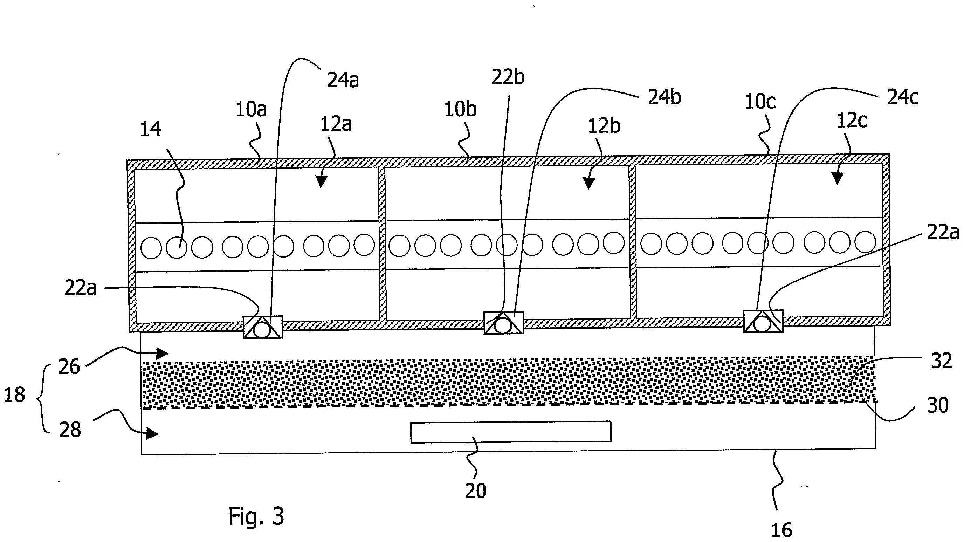

Un deuxième mode de réalisation de l'invention est représenté sur la figure 3. Suivant ce mode de réalisation, une installation de distribution électrique comporte une pluralité de cellules haute tension. Chaque cellule comporte une enveloppe étanche 10a, 10b, 10c formant une enceinte de confinement 12a, 12b, 12c pour du matériel électrique haute tension. Les cellules reposent sur un piétement commun 16 formant une enceinte de refroidissement 18 commune. Chaque cellule est pourvue, sur sa paroi inférieure, d'un orifice d'échappement 22a, 22b, 22c fermé par un clapet anti-retour 24a, 24b, 24c. L'enceinte de refroidissement 18 comporte comme dans le premier mode de réalisation une grille intermédiaire 30 supportant une ou plusieurs couches de matériau granulaire 32. Le fonctionnement de l'installation en cas d'arc électrique interne dans l'une des cellules est identique à celui décrit précédemment pour le premier mode de réalisation. On remarquera toutefois qu'en remplaçant les membranes du premier mode de réalisation par des clapets anti-retour, on garantit que l'augmentation de pression subite dans le volume supérieur de l'enceinte de refroidissement au début de l'incident ne provoque pas une entrée de gaz dans les cellules adjacentes non affectées.

Naturellement, diverses modifications sont possibles.

La membrane utilisée pour fermer l'orifice de communication peut être remplacée par un clapet s'ouvrant lorsque la différence entre la pression régnant à l'intérieur de l'enceinte de confinement et la pression régnant dans l'enceinte de refroidissement dépasse un seuil donné.

Le matériau solide granulaire peut être disposé en plusieurs couches, séparées le cas échéant par des grilles rigides ou non rigides. Les différentes couches peuvent avoir des granulométries différentes. Plus généralement, les différentes couches peuvent être constituées de matériaux différents.

Il est également envisageable d'utiliser un matériau granulaire aggloméré, à condition que les grains soient de diamètre suffisamment important et que subsiste entre les grains des chemins pour le passage des gaz. A cet égard, une plaque rigide réalisée avec des grains de pouzzolane, d'un diamètre de 10 à 15 mm par exemple, liés par un ciment réfractaire, notamment un ciment à base de poussière de pouzzolane, peut constituer une alternative intéressante. L'intérêt d'une telle solution est de faciliter le positionnement du filtre, verticalement ou obliquement par exemple. La poussière naturellement contenue dans la pouzzolane suffit alors à provoquer le nuage recherché.

On peut également utiliser pour matériau solide granulaire un matériau inhomogène, comportant des grains ayant des diamètres différents.

Le gaz présent dans l'enceinte de confinement peut être de l'air. L'enceinte de confinement peut être ou non sous pression.

L'invention est également applicable à des installations basse tension.

## Revendications

1. - Installation électrique comportant :
- une enceinte de confinement (12) d'une unité fonctionnelle (13) à isolation gazeuse,
- un chemin d'évacuation de l'intérieur de l'enceinte de confinement (12) vers l'extérieur, d'un flux gazeux dû à un arc électrique interne dans l'enceinte de confinement (12),
- une couche poreuse de matériau solide granulaire non combustible (32) disposée dans le chemin d'évacuation de manière à être traversée par le flux gazeux,
**caractérisée en ce que** ladite couche poreuse (32) est logée dans une enceinte de refroidissement (18) reliée à l'enceinte de confinement (12) par un orifice de sortie (22, 22a, 22b), ladite couche étant composée et disposée de manière à générer un nuage (42) de poussières solides non combustibles lorsque un flux gazeux passe à travers l'orifice de sortie (22, 22a, 22b) précité et la couche poreuse (32) logée dans l'enceinte de refroidissement, (18) la présence de particules solides en suspension dans le gaz modifiant à la fois la stoechiométrie du mélange, sa capacité calorifique et sa cinétique, de manière à contribuer à inhiber la ré-inflammation de gaz.

2. - Installation électrique à isolation gazeuse selon la revendication 1, **caractérisée en ce que** le matériau solide granulaire (32) est non aggloméré.

3. - Installation électrique à isolation gazeuse selon la revendication 2, **caractérisée en ce que** le matériau solide granulaire (32) est friable.

4. - Installation électrique à isolation gazeuse selon l'une quelconque des revendications précédentes, **caractérisée en ce que** le matériau solide granulaire (32) est constitué au moins partiellement par des grains poreux.

5. - Installation électrique à isolation gazeuse selon la revendication 4, **caractérisée en ce que** les grains poreux sont choisi parmi des grains de pierre ponce, de pouzzolane ou de siporex®.

6. - Installation électrique à isolation gazeuse selon l'une quelconque des revendications précédentes, **caractérisée en ce que** la couche de matériau granulaire contient, de manière disséminée dans le matériau solide granulaire, de la poussière solide incombustible pour former ledit nuage (42).

7. - Installation électrique à isolation gazeuse selon l'une quelconque des revendications précédentes, **caractérisée en ce que** le chemin d'évacuation des gaz est fermé par un moyen d'obturation (24) s'ouvrant automatiquement lorsqu'il est soumis à une différence de pression dépassant un seuil prédéterminé.

8. - Installation électrique à isolation gazeuse selon l'une quelconque des revendications précédentes, **caractérisée en ce que** la couche est disposée en aval du moyen d'obturation (24).

9. - Installation électrique à isolation gazeuse selon la revendication 8, **caractérisée en ce que** le chemin d'évacuation des gaz s'élargit des moyens d'obturation à la couche, formant un volume d'expansion des gaz (26).

10. - Installation électrique à isolation gazeuse selon la revendication 9, **caractérisée en ce que** le chemin d'évacuation des gaz présente, au niveau du moyen d'obturation, une section d'ouverture, la couche présentant une surface extérieure libre (34) située en regard du moyen d'obturation (24) ayant une aire supérieure à trois fois l'aire la section d'ouverture.

11. - Installation électrique à isolation gazeuse selon la revendication 10, **caractérisée en ce que** la surface extérieure libre (34) est située, par rapport à la section d'ouverture, à une distance inférieure à six fois un diamètre caractéristique d'ouverture, défini comme le diamètre du plus grand cercle inscrit dans ladite section d'ouverture.

## Patentansprüche

1. Elektrische Anlage, die Folgendes umfasst:
- einen Behälter (12) zum Einschließen unter Gasisolation einer funktionalen Einheit (13),
- einen Weg zum Abführen eines gasförmigen Stroms, der durch einen elektrischen Lichtbogen in dem Einschlussbehälter (12) hervorgerufen wird, aus dem Inneren des Einschlussbehälters (12) in die äußere Umgebung,
- eine poröse Schicht (32) aus einem nicht brennbaren, körnigen Festkörpermaterial, die in dem Abführweg angeordnet ist, derart, dass sie von dem Gasstrom durchquert wird,
**dadurch gekennzeichnet, dass** sich die poröse Schicht (32) in einem Kühlbehälter (18) befindet, der mit dem Einschlussbehälter (12) durch eine Auslassöffnung (22, 22a, 22b) verbunden ist, wobei die Schicht in der Weise zusammengesetzt und angeordnet ist, dass eine Wolke (42) nicht brennbarer, fester Stäube erzeugt wird, wenn sich ein Gasstrom durch die obige Auslassöffnung (22, 22a, 22b) und die poröse Schicht (32), die sich in dem Kühlbehälter (18) befindet, bewegt, wobei das Vorhandensein von Festkörperpartikeln in Suspension in dem Gas sowohl die Stöchiometrie des Gemisches als auch seine spezifische Wärmekapazität und seine Kinetik in der Weise modifiziert, dass sie zur Verhinderung der erneuten Entflammung des Gases beitragen.

2. Elektrische Anlage mit Gasisolation nach Anspruch 1, **dadurch gekennzeichnet, dass** das körnige Festkörpermaterial (32) nicht gebunden ist.

3. Elektrische Anlage mit Gasisolation nach Anspruch 2, **dadurch gekennzeichnet, dass** das körnige Festkörpermaterial (32) brüchig ist.

4. Elektrische Anlage mit Gasisolation nach einem der vorhergehenden Ansprüche, **dadurch gekennzeichnet, dass** das körnige Festkörpermaterial (32) wenigstens teilweise durch poröse Körner gebildet ist.

5. Elektrische Anlage mit Gasisolation nach Anspruch 4, **dadurch gekennzeichnet, dass** die porösen Körner aus Bimsstein-, Puzzolanerde- oder Siporex®-Körnern gewählt sind.

6. Elektrische Anlage mit Gasisolation nach einem der vorhergehenden Ansprüche, **dadurch gekennzeichnet, dass** die körnige Materialschicht eingesprengt in das körnige Festkörpermaterial nicht brennbare Festkörperstäube enthält, um die Wolke (42) zu bilden.

7. Elektrische Anlage mit Gasisolation nach einem der vorhergehenden Ansprüche, **dadurch gekennzeichnet, dass** der Abführweg der Gase durch ein Verschlussmittel (24) verschlossen ist, das sich automatisch öffnet, wenn es einem Druckunterschied unterliegt, der einen vorgegebenen Schwellenwert überschreitet.

8. Elektrische Anlage mit Gasisolation nach einem der vorhergehenden Ansprüche, **dadurch gekennzeichnet, dass** die Schicht stromabseitig des Verschlussmittels (24) angeordnet ist.

9. Elektrische Anlage mit Gasisolation nach Anspruch 8, **dadurch gekennzeichnet, dass** sich der Gasabführweg von den Verschlussmitteln zu der Schicht erweitert und ein Gasexpansionsvolumen (26) bildet.

10. Elektrische Anlage mit Gasisolation nach Anspruch 9, **dadurch gekennzeichnet, dass** der Gasabführweg auf Höhe des Verschlussmittels einen Öffnungsquerschnitt aufweist, wobei die Schicht eine freie äußere Oberfläche (34) aufweist, die sich gegenüber dem Verschlussmittel (24) befindet, und einen Flächeninhalt hat, der größer als der dreifache Flächeninhalt des Öffnungsquerschnitts ist.

11. Elektrische Anlage mit Gasisolation nach Anspruch 10, **dadurch gekennzeichnet, dass** sich die freie äußere Oberfläche (34) in Bezug auf den Öffnungsquerschnitt in einem Abstand befindet, der kleiner als der sechsfache charakteristische Durchmesser der Öffnung ist, der als der Durchmesser des größten Kreises, der in den Öffnungsquerschnitt eingeschrieben ist, definiert ist.

## Claims

1. Electrical installation comprising:
- a containment chamber (12) of a gas-insulated functional unit (13),
- a discharge path inside the containment chamber (12) to the outside, for a gas flow due to an internal electric arc in the containment chamber (12),
- a porous layer of non-combustible granular solid material (32) disposed in the discharge path so as to be passed through by the gas flow,
**characterised in that** said porous layer (32) is housed in a cooling chamber (18) linked to the containment chamber (12) by an outlet orifice (22, 22a, 22b), said layer being composed and disposed so as to generate a cloud (42) of non-combustible solid dust when a gas flow passes through the abovementioned outlet orifice (22, 22a, 22b) and the porous layer (32) housed in the cooling chamber (18), the presence of solid particles in suspension in the gas modifying the stoichiometry of the mixture, its heat capacity and its kinetics, so as to contribute to inhibiting the re-ignition of gas.

2. Gas-insulated electrical installation according to Claim 1, **characterised in that** the granular solid material (32) is non-agglomerated.

3. Gas-insulated electrical installation according to Claim 2, **characterised in that** the granular solid material (32) is friable.

4. Gas-insulated electrical installation according to any one of the preceding claims, **characterised in that** the granular solid material (32) consists at least partly of porous grains.

5. Gas-insulated electrical installation according to Claim 4, **characterised in that** the porous grains are chosen from grains of pumice stone, pozzolan or Siporex®.

6. Gas-insulated electrical installation according to any one of the preceding claims, **characterised in that** the layer of granular material contains, disseminated in the granular solid material, non-combustible solid dust to form said cloud (42).

7. Gas-insulated electrical installation according to any one of the preceding claims, **characterised in that** the gas discharge path is closed by a blocking means (24) opening automatically when it is subjected to a pressure difference exceeding a predetermined threshold.

8. Gas-insulated electrical installation according to any one of the preceding claims, **characterised in that** the layer is disposed downstream of the blocking means (24).

9. Gas-insulated electrical installation according to Claim 8, **characterised in that** the gas discharge path widens from the blocking means to the layer, forming a gas expansion volume (26).

10. Gas-insulated electrical installation according to Claim 9, **characterised in that** the gas discharge path has, at the level of the blocking means, an aperture section, the layer having a free outer surface (34) situated facing the blocking means (24) having an area greater than three times the area of the aperture section.

11. Gas-insulated electrical installation according to Claim 10, **characterised in that** the free outer surface (34) is situated, in relation to the aperture section, at a distance less than six times a characteristic aperture diameter, defined as the diameter of the largest circle inscribed in said aperture section.
